# EUROPEAN PATENT APPLICATION

(11) **EP 2 636 470 A1**
(43) Date of publication of application: **11.09.2013**
(21) Application number: 11838102.9
(22) Date of filing: 04.11.2011
(51) Int. Cl.: B22F 3/02, B22F 3/00, B22F 3/03, H01F 41/02

(54) **HIGH DENSITY MOLDING METHOD AND HIGH DENSITY MOLDING DEVICE FOR MIXED POWDER**

(30) Priority: 04.11.2010 JP 2010247310
(71) Applicant: Aida Engineering, Ltd., Sagamihara-shi, Kanagawa 252-5181 (JP)
(72) Inventor: HIRAI, Yoshiki, Sagamihara-shi Kanagawa 252-5181 (JP)
(74) Representative: Roos, Peter
(86) International application number: PCT/JP2011/075499
(87) International publication number: WO 2012/060452

(57) **Abstract**

A first die is filled with a mixed powder that includes a lubricant powder, and a first pressure is applied to the mixed powder in the first die to form a mixed powder intermediate compressed body. The mixed powder intermediate compressed body is heated to the melting point of the lubricant powder, and the heated mixed powder intermediate compressed body is placed in a second die that has been pre-heated to the melting point of the lubricant powder. A second pressure is applied to the mixed powder intermediate compressed body in the second die to form a high-density mixed powder final compressed body.

## Description

### TECHNICAL FIELD

The present invention relates to a high-density molding method and a high-density molding system that can form a high-density green compact by pressing a mixed powder twice.

### BACKGROUND ART

Powder metallurgy is a technique that normally presses (compresses) a metal powder to form a green compact having a given shape, and heats the green compact to a temperature around the melting point of the metal powder to promote intergranular coupling (solidification) (sintering process). This makes it possible to inexpensively produce a mechanical part that has a complex shape and high dimensional accuracy.

An increase in mechanical strength of a green compact has been desired since a further reduction in size and weight of mechanical parts. The mechanical strength of a green compact increases significantly (hyperbolically) as the density of the green compact increases. For example, a method that mixes a lubricant into a metal powder, and press-molds the metal powder to reduce friction resistance has been proposed (e.g. JP-A-1-219101). Various other methods have been proposed to achieve higher density. These methods can be roughly classified into a method that improves the lubricant and a method that improves the press molding/sintering process.

Examples of the method that improves the lubricant include a method that utilizes a composite of carbon molecules obtained by combining a ball-like carbon molecule with a sheet-like carbon molecule as the lubricant (see JP-A-2009-280908, for example), and a method that utilizes a lubricant having a penetration at 25°C of 0.3 to 10 mm (see JP-A-2010-37632, for example). These methods aim at reducing the friction resistance between the metal powder and a die.

Examples of the method that improves the press molding/sintering process include a warm molding/sinter powder metallurgy technique (see JP-A-2-156002, for example), a double press/double sinter powder metallurgy technique (see JP-A-4-231404, for example), and a single press/sinter powder metallurgy technique (see JP-A-2001-181701, for example).

According to the warm molding/sinter powder metallurgy technique, a metal powder prepared by mixing a solid lubricant and a liquid lubricant is preheated to melt part or the entirety of the lubricant, and disperse the lubricant between the metal powder particles. This technique thus reduces the inter-particle friction resistance and the friction resistance between the particles and a die to improve formability. According to the double press/double sinter powder metallurgy technique, an iron powder mixture that contains an alloying component is compressed in a die to obtained a compressed body, the compressed body is presintered at 870°C for 5 minutes, and compressed to obtain a presintered body, and the presintered body is sintered at 1000°C for 5 minutes to obtain a sintered body (part). According to the single press/sinter powder metallurgy technique, a die is preheated, and a lubricant is caused to electrically adhere to the inner side of the die. The die is filled with a heated iron-based powder mixture (iron-based powder+lubricant powder), and the powder mixture is press-molded at a given temperature to obtain an iron-based powder molded body. The iron-based powder molded body is sintered, and subjected to bright quenching and annealing to obtain an iron-based sintered body.

The above methods that improve the lubricant or the press molding/sintering process are complex, may increase cost, and have a problem in that handling of the material is difficult or troublesome. The density of the green compact achieved by the above methods is about 7.4 g/cm³ (94% of the true density) at a maximum in spite of the above disadvantages. Moreover, oxidation proceeds depending on the temperature and the time of the sintering process performed at a high temperature, and the lubricant is burned out to produce a residue. As a result, the quality of the resulting green compact deteriorates. Therefore, the density of the green compact is limited to 7.3 g/cm³ or less in actual applications. The green compact exhibits insufficient mechanical strength when the density of the green compact is 7.3 g/cm³ or less.

In particular, when producing a magnetic core for an electromechanical device (e.g., motor or transformer) using a green compact, a good magnetic core may not be produced when the density of the green compact is 7.3 g/cm³ or less. It is necessary to further increase the density of a green compact in order to reduce loss (iron loss and hysteresis loss), and increase magnetic flux density (see the document presented by Toyota Central R & D Labs., Inc. in Autumn Meeting of Japan Society of Powder and Powder Metallurgy, 2009).

When a green compact is subjected to a high temperature, the magnetic properties of the green compact may deteriorate. Therefore, the subsequent high-temperature treatment (sintering process) may often be omitted when producing a magnetic-core green compact. In this case, the resulting magnetic core has a density of 7.5 g/cm³ or less. Therefore, the resulting magnetic core exhibits insufficient magnetic properties and mechanical strength.

A double molding/single sinter (anneal) powder metallurgy technique (see JP-A-2002-343657, for example) has been proposed as a method that produces a magnetic-core green compact. The above powder metallurgy technique is based on the fact that a magnetic metal powder that is coated with a coating that contains a silicone resin and a pigment does not show a decrease in insulating properties even if the magnetic metal powder is subjected to a high-temperature treatment. Specifically, a dust core is produced by preforming a magnetic metal powder that is coated with a coating that contains a silicone resin and a pigment to obtain a preformed body, subjecting the preformed body to a heat treatment at 500°C or more to obtain a heat-treated body, and compressing the heat-treated body. If the heat treatment temperature is less than 500°C, breakage may occur during compression molding. If the heat treatment temperature is more than 1000°C, the insulating coating may be decomposed (i.e., insulating properties may be impaired). Therefore, the heat treatment temperature is set to 500 to 1000°C. The high-temperature treatment is performed under vacuum, an inert gas atmosphere, or a reducing gas atmosphere in order to prevent oxidation of the preformed body. A dust core having a true density of 98% (7.7 g/cm³) may be produced as described above.

### SUMMARY OF THE INVENTION

### TECHNICAL PROBLEM

However, the double molding/single sinter powder metallurgy technique is very complex, individualized, and difficult to implement as compared with other techniques, and significantly increases the production cost. The double molding/single sinter powder metallurgy technique subjects the preformed body to a heat treatment at 500°C or more. The heat treatment is performed at such a temperature in order to prevent a situation in which the quality of the dust core deteriorates. Therefore, the double molding/single sinter powder metallurgy technique is not suitable for mass production. In particular, when using a vitreous film-coated magnetic metal powder, the vitreous material may be modified/melted.

The above methods/systems can implement a sintering process at a relatively high temperature. However, the details of the press molding step achieved using the above methods/systems are unclear. Moreover, attempts to achieve a further improvement in connection with the specification and functions of the press molding device, the relationship between pressure and density, and the analysis of the limitations thereof, have not been made.

As described above, a further increase in mechanical strength has been desired along with a reduction in size and weight of mechanical parts and the like, and there is an urgent need to develop a method and a system that can reliably, stably, and inexpensively produce a high-density green compact (particularly a magnetic-core high-density green compact).

An object of the invention is to provide a mixed powder high-density molding method and a mixed powder high-density molding system that can produce a high-density green compact while significantly reducing the production cost by press-molding a mixed powder twice with a heating step interposed therebetween.

### SOLUTION TO PROBLEM

A green compact has been normally produced by a powder metallurgy technique, and subjected to a sintering process at a high temperature (e.g., 800°C or more). However, such a high-temperature sintering process consumes a large amount of energy (i.e., increases cost), and is not desirable from the viewpoint of environmental protection.

The press molding process forms a mixed powder to have a specific shape, and has been considered to be a mechanical process that is performed in the preceding stage of the high-temperature sintering process. The high-temperature sintering process is exceptionally omitted when producing a magnetic-core green compact used for an electromagnetic device (e.g., motor or transformer). This aims at preventing a deterioration in magnetic properties that may occur when the green compact is subjected to a high-temperature process. Specifically, the resulting product inevitably has unsatisfactory mechanical strength. Since the density of the product is insufficient when mechanical strength is insufficient , the product also has insufficient magnetic properties.

It is possible to significantly promote industrial utilization and widespread use of a green compact if a high-density green compact can be formed only by the press molding process without performing the high-temperature sintering process. The invention was conceived based on studies of the effectiveness of a lubricant during pressing, the compressed limit when using a lubricant powder, the spatial distribution of a lubricant powder in a mixed powder, the spatial distribution of a basic metal powder and a lubricant powder, the behavior of a basic metal powder and a lubricant powder, and the final disposition state of a lubricant, and analysis of the characteristics (e.g., compressed limit) of a normal press molding device, and the effects of the density of a green compact on strength and magnetic properties.

Specifically, the invention may provide a method that forms an intermediate green compact by a first pressing step while maintaining a lubricant in a powdery state, liquefies the lubricant by heating to change the state of the lubricant in the intermediate green compact, and forms a high-density final green compact having a density close to the true density by a second pressing step. In other words, the invention may provide a novel powder metallurgy technique (i.e., a powder metallurgy technique that performs two press molding steps with a lubricant liquefaction step interposed therebetween) that differs from a known powder metallurgy technique that necessarily requires a high-temperature sintering process, and may provide an epoch-making method and system that can reliably and stably produce a high-density green compact at low cost.

According to one aspect of the invention, there is provided a mixed powder high-density molding method including:
filling a first die with a mixed powder that is a mixture of a basic metal powder and a low-melting-point lubricant powder;
applying a first pressure to the mixed powder in the first die to form a mixed powder intermediate compressed body;
heating the mixed powder intermediate compressed body removed from the first die to a melting point of the lubricant powder;
placing the heated mixed powder intermediate compressed body in a second die that has been pre-heated to the melting point of the lubricant powder; and
applying a second pressure to the mixed powder intermediate compressed body in the second die to form a high-density mixed powder final compressed body.

The mixed powder high-density molding method can reliably and stably produce a high-density green compact while significantly reducing the production cost.

In the mixed powder high-density molding method, the lubricant powder may have a low melting point within the range of 90 to 190°C.

This makes it possible to ensure that the lubricant produces a sufficient lubricating effect during the first pressing step, and use a wide variety of lubricants.

In the mixed powder high-density molding method, the mixed powder may be prepared by mixing a magnetic-core vitreous insulating film-coated iron powder as the basic metal powder with 0.03 to 0.10 wt% of a zinc stearate powder as the lubricant powder, and the first pressure may be selected so that the mixed powder intermediate compressed body can be compressed to have a density of 7.0 to 7.5 g/cm³.

This makes it possible to efficiently produce a magnetic-core green compact that can reduce eddy current loss and improve magnetic flux density.

In the mixed powder high-density molding method, the mixed powder may be prepared by mixing a magnetic-core iron-based amorphous powder as the basic metal powder with 0.03 to 0.10 wt% of a zinc stearate powder as the lubricant powder, and the first pressure may be selected so that the mixed powder intermediate compressed body can be compressed to have a true density ratio of 60 to 75%.

This makes it possible to efficiently produce a magnetic-core green compact that can reduce iron loss and exciting current.

In the mixed powder high-density molding method, the mixed powder may be prepared by mixing a magnetic-core Fe-Si alloy powder as the basic metal powder with 0.03 to 0.10 wt% of a zinc stearate powder as the lubricant powder, and the first pressure may be selected so that the mixed powder intermediate compressed body can be compressed to have a true density ratio of 70 to 85%.

This makes it possible to efficiently produce a magnetic-core green compact that exhibits excellent magnetic properties as compared with a green compact formed by a related-art method.

In the mixed powder high-density molding method, the second pressure may be selected to be equal to the first pressure.

This makes it possible to easily implement the press molding step, facilitate handling, and indirectly reduce the green compact production cost.

According to another aspect of the invention, there is provided a mixed powder high-density molding system including:
a mixed powder feeding device that can externally supply a mixed powder that is a mixture of a basic metal powder and a low-melting-point lubricant powder;
a first press molding device that applies a first pressure to the mixed powder, with which a first die has been filled using the mixed powder feeding device, to form a mixed powder intermediate compressed body;
a heating device that heats the mixed powder intermediate compressed body removed from the first die to a melting point of the lubricant powder; and
a second press molding device that includes a second die that can be pre-heated to the melting point in advance, and applies a second pressure to the mixed powder intermediate compressed body that is placed in the second die that has been pre-heated to form a high-density mixed powder final compressed body.

The mixed powder high-density molding system can reliably implement the mixed powder high-density molding method, can be easily implemented, and facilitates handling.

In the mixed powder high-density molding system, the heating device and the second press molding device may be formed by a heating/press molding device that has a function of the heating device and a function of the second press molding device, the heating/press molding device may include a plurality of heating/press molding sub-devices, and each of the plurality of heating/press molding sub-devices may be selectively and sequentially operated in each cycle.

This makes it possible to further simplify the system. It is also possible to simplify the production line, and further facilitate handling.

### BRIEF DESCRIPTION OF DRAWINGS

FIG. 1 is a view illustrating a high-density molding method according to one embodiment of the invention.
FIG. 2 is a view illustrating a high-density molding system (and its operation) according to a first embodiment of the invention.
FIG. 3A is a view illustrating a mixed powder high-density molding operation, and illustrates a state in which a mixed powder intermediate compressed body is formed using a first die.
FIG. 3B is a view illustrating a mixed powder high-density molding operation, and illustrates a state in which a first die is filled with a mixed powder.
FIG. 4 is a graph illustrating the relationship between pressure and density (obtained at the pressure), wherein a broken line (A) indicates a molding state using a first die, and a solid line (B) indicates a molding state using a second die.
FIG. 5A is an external perspective view illustrating a ring-like mixed powder intermediate compressed body.
FIG. 5B is an external perspective view illustrating an elongated cylindrical mixed powder intermediate compressed body.
FIG. 6 is a front view illustrating a high-density molding system (and its operation) according to a second embodiment of the invention.

### DESCRIPTION OF EMBODIMENTS

Exemplary embodiments of the invention are described in detail below with reference to the drawings.

### First embodiment

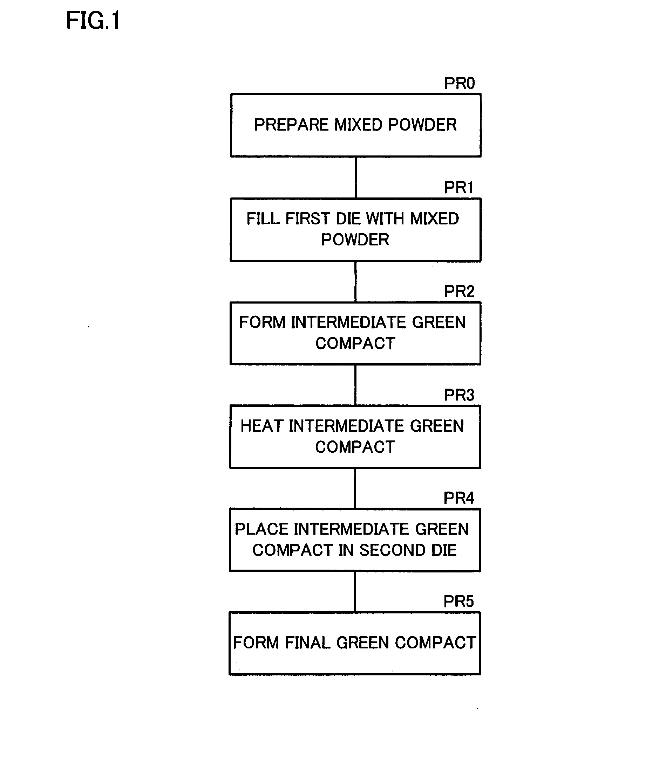

As illustrated in FIGS. 1 to 5, a mixed powder high-density molding system 1 according to a first embodiment of the invention includes a mixed powder feeding device 10, a first press molding device 20, a heating device 30, and a second press molding device 40, and can stably and reliably implement a mixed powder high-density molding method according to the first embodiment of the invention that includes a mixed powder-filling step (PR1) that fills a first die (lower die 21) with a mixed powder 100, an intermediate green compact-forming step (PR2) that applies a first pressure (P1) to the mixed powder in the first die to form a mixed powder intermediate compressed body (hereinafter may be referred to as "intermediate green compact") 110, a heating step (PR3) that heats the intermediate green compact 110 removed from the first die (lower die 21) to the melting point of a lubricant powder, a step (PR4) that places the heated intermediate green compact in a second die (lower die 41), and a final green compact-forming step (PR5) that applies a second pressure P2 to the intermediate green compact in the second die (lower die 41) that is pre-heated to the melting point of the lubricant powder to form a high-density mixed powder final compressed body (hereinafter may be referred to as "final green compact") 120.

The mixed powder 100 is a mixture of a basic metal powder and a low-melting-point lubricant powder. The basic metal powder may include only one type of main metal powder, or may be a mixture of one type of main metal powder and one or more types of alloying component powder. The expression "low melting point" used herein in connection with the lubricant powder refers to a temperature (melting point) that is significantly lower than the melting point (temperature) of the basic metal powder, and can significantly suppress oxidation of the basic metal powder. The details thereof are described later.

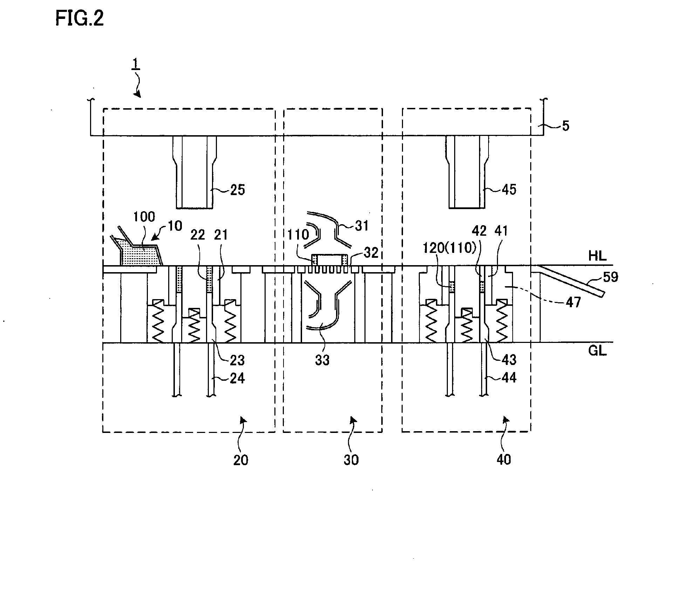

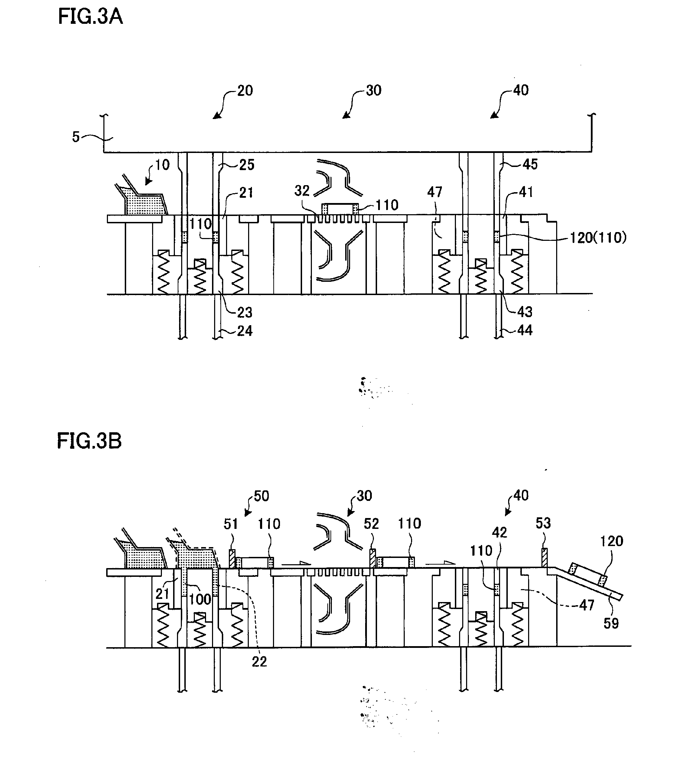

As illustrated in FIG. 2 that illustrates the high-density molding system 1, the mixed powder feeding device 10 is disposed on the leftmost side (upstream side) of a high-density molding line. The mixed powder feeding device 10 is a means that fills the first die (lower die 21) included in the first press molding device 20 with the mixed powder 100. The mixed powder feeding device 10 has a function of storing a constant amount of the mixed powder 100, and a function of feeding a constant amount of the mixed powder 100. The mixed powder feeding device 10 can selectively move between the initial position (i.e., the position indicated by the solid line in FIGS. 2 and 3A) and the position over the first die (lower die 21) (i.e., the position indicated by the dotted line in FIG. 3B).

Since it is important to uniformly and sufficiently fill the first die (lower die 21) with the mixed powder 100, the mixed powder 100 must be in a dry state. Specifically, since the shape of the cavity of the first die (lower die 21) corresponds to the shape of the product, it is necessary to uniformly and sufficiently fill the first die with the mixed powder 100 in order to ensure the dimensional accuracy of the intermediate green compact 110, even if the product has a complex shape, or has a narrow part.

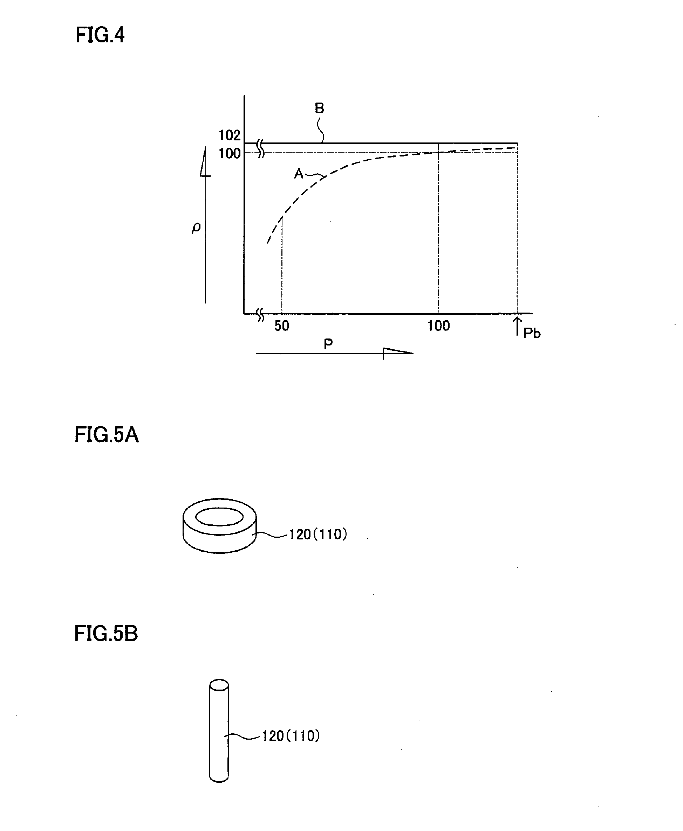

In the first embodiment, the intermediate green compact 110 (final green compact 120) has a ring-like shape illustrated in FIG. 5A, and a cavity 22 of the first die has a shape corresponding to the shape of the intermediate green compact 110 (final green compact 120).

A solid lubricant that is in a dry state (fine particulate) at room temperature is used as the lubricant that is used to reduce the inter-particle friction resistance of the basic metal powder and the friction resistance between the basic metal powder and the inner side of the die. For example, since the mixed powder 100 exhibits high viscosity and low fluidity when using a liquid lubricant, it is difficult to uniformly and sufficiently fill the first die with the mixed powder 100.

It is also necessary for the lubricant to be solid and stably maintain a given lubricating effect during the intermediate green compact molding step that is performed in the first die (21) at room temperature while applying the first pressure P1. The lubricant must stably maintain a given lubricating effect even if an increase in temperature has occurred to some extent as a result of applying the first pressure P1.

On the other hand, the melting point of the lubricant powder must be significantly lower than the melting point of the basic metal powder from the viewpoint of the relationship with the heating step (PR3) performed after the intermediate green compact molding step, and suppression of oxidation of the basic metal powder.

In the first embodiment, the lubricant powder has a low melting point within the range of 90 to 190°C. The lower-limit temperature (90°C) is selected to be higher to some extent than the upper-limit temperature (80°C) of a temperature range (70-80°C) that is not reached even if an increase in temperature has occurred to some extent during the intermediate green compact molding step, while taking account of the melting point (e.g., 110°C) of other metallic soaps. This prevents a situation in which the lubricant powder is melted (liquefied) and flows during the intermediate green compact molding step.

The upper-limit temperature (190°C) is selected to be a minimum value from the viewpoint of lubricant powder selectivity, and is selected to be a maximum value from the viewpoint of suppression of oxidation of the basic metal powder during the heating step. Specifically, it should be understood that the lower-limit temperature and the upper-limit temperature of the above temperature range (90 to 190°C) are not threshold values, but are boundary values.

This makes it possible to selectively use an arbitrary metallic soap (e.g., zinc stearate or magnesium stearate) as the lubricant powder. Note that a viscous liquid such as zinc octylate cannot be used since the lubricant must be powdery.

In each example described later, a zinc stearate powder having a melting point of 120°C was used as the lubricant powder. Note that the invention does not employ a configuration in which a lubricant having a melting point lower than the die temperature during press molding is used, and the press molding step is performed while melting (liquefying) the lubricant (see Patent Document 6). If the lubricant is melted and flows out before completion of molding of the intermediate green compact 110, lubrication tends to be partially insufficient during the molding step, and sufficient press molding cannot be performed reliably and stably.

The lubricant powder is used in an amount (0.02 to 0.12 wt% of the total amount of the mixed powder) selected based on an empirical rule determined by experiments. The amount of the lubricant powder is preferably 0.03 to 0.10 wt%. When the amount of the lubricant powder is 0.03 wt%, the best lubricating effect can be ensured during molding of the intermediate green compact 110. When the amount of the lubricant powder is 0.10 wt%, the desired compression ratio can be obtained when forming the intermediate green compact 110 from the mixed powder 100. These values were employed in each example.

The first press molding device 20 is a means that applies the first pressure P1 to the mixed powder 100 with which the first die 21 has been filled using the mixed powder feeding device 10, to form the mixed powder intermediate compressed body 110. In the first embodiment, the first press molding device 20 has a press structure.

As illustrated in FIG. 2, the die includes the lower die 21 that is secured on a bolster, and the upper die 25 that is secured on a slide 5. The cavity 22 of the lower die 21 has a shape (cylindrical shape) corresponding to the shape (ring-like shape) of the intermediate green compact 110. The upper die 25 can be pushed into the lower die 21 (22), and is moved upward and downward using the slide 5. A movable member 23 is fitted into the lower side of the cavity 22 so that the movable member 23 can move in the vertical direction.

The movable member 23 is moved upward using a knockout pin (not illustrated in the drawings) that moves upward through a through-hole 24 that is formed under a ground level GL. The intermediate green compact 110 in the die (21 (22)) can thus be moved upward to a transfer level HL. The movable member 23 functions as a first ejection means for ejecting the intermediate green compact 110 in the die (21 (22)) to the outside (transfer level HL). The movable member 23 and the knockout pin are returned to the initial position after the intermediate green compact 110 has been transferred to the heating device 30. Note that the first ejection means may be implemented using another means.

The relationship between the pressure P (first pressure P1) applied by the first press molding device 20 and the density rho of the resulting intermediate green compact 110 is described below with reference to FIG. 4. The horizontal axis indicates the pressure P using an index. In the first embodiment, the maximum capacity (pressure P) is 10 tons/cm² (horizontal axis index: 100). Reference sign Pb indicates the die breakage pressure at which the horizontal axis index is 140 (14 tons/cm²). The vertical axis indicates the density rho using an index. A vertical axis index of 100 corresponds to a density rho of 7.6 g/cm³.

A vertical axis index of 102 corresponds to a density rho of 7.75 g/cm³. A vertical axis index of 92 corresponds to a density rho of 7.0 g/cm³, and a vertical axis index of 98 corresponds to a density rho of 7.5 g/cm³.

The density rho achieved by the first press molding device 20 increases along the curve indicated by the broken line (A) as the first pressure P1 increases. The density rho reaches 7.6 g/cm³ when the horizontal axis index (first pressure is P1) is 100. The density rho increases to only a small extent even if the first pressure P1 is further increased. The die may break if the first pressure P1 is further increased.

When the density rho achieved by compression at the maximum capacity of the press molding device (press) is not satisfactory, it has been necessary to provide a larger press. However, the density rho increases to only a small extent even if the maximum capacity is increased by a factor of 1.5, for example. Therefore, it has been necessary to accept a low density rho (e.g., 7.5 g/cm³) when using an existing press.

It is possible to achieve a major breakthrough if the vertical axis index can be increased from 100 (7.6 g/cm³) to 102 (7.75 g/cm³) by directly utilizing an existing press. Specifically, it is possible to significantly (hyperbolically) improve magnetic properties, and also significantly improve mechanical strength if the density rho can be increased by 2%. Moreover, since a sintering process at a high temperature can be made unnecessary, oxidation of the green compact can be significantly suppressed (i.e., a decrease in magnetic core performance can be prevented).

In order to achieve the above breakthrough, the high-density molding system 1 is configured so that the intermediate green compact 110 formed by the first press molding device 20 is heated to promote melting (liquefaction) of the lubricant, and the second press molding device 40 then performs the second press molding process. A high density (7.75 g/cm³) rho that corresponds to a vertical axis index of 102 (see the solid line (B) in FIG. 4) can be achieved by pressing the intermediate green compact 110 using the second press molding device 40. The details thereof are described later in connection with the second press molding device 40.

The heating device 30 is a means that heats the mixed powder intermediate compressed body (intermediate green compact) 110 removed from the first die 21 to the melting point of the lubricant powder. As illustrated in FIG. 2, the heating device 30 includes a hot air generator (not illustrated in FIG. 2), a blow hood 31, an exhaust/circulation hood 33, and the like. The heating device 30 blows hot air against the intermediate green compact 110 that is positioned using a wire-mesh holding member 32 to heat the intermediate green compact 110 to the melting point (120°C) of the lubricant powder. Zinc stearate used in each example has a melting point of 120°C.

The technological significance of the above low-temperature heat treatment is described below in connection with the relationship with the first press molding process. The powder mixture 100 with which the lower die 21 (22) is filled has an area in which the lubricant powder is relatively thinly present (thin area), and an area in which the lubricant powder is relatively densely present (dense area) in connection with the basic metal powder. The inter-particle friction resistance of the basic metal powder, and the friction resistance between the basic metal powder and the inner side of the die can be reduced in the dense area. In contrast, the inter-particle friction resistance of the basic metal powder, and the friction resistance between the basic metal powder and the inner side of the die increase in the thin area.

When the first press molding device 20 applies a pressure to the mixed powder, compressibility is predominant (i.e., compression easily occurs) in the dense area due to low friction. In contrast, compressibility is poor (i.e., compression slowly occurs) in the thin area due to high friction. Therefore, a compression difficulty phenomenon corresponding to the preset first pressure P1 occurs (i.e., compressed limit). In this case, when the fracture surface of the intermediate green compact 110 removed from the die 21 is magnified, the basic metal powder is integrally pressure-welded in the dense area. However, the lubricant powder is also present in the dense area. In the thin area, small spaces remain in the pressure-welded basic metal powder, and almost no lubricant powder is observed in the thin area.

Therefore, it is possible to form compressible spaces by removing the lubricant powder from the dense area, and improve the compressibility of the thin area by supplying the lubricant to the spaces formed in the thin area.

Specifically, the lubricant powder is melted (liquefied), and increased in fluidity by heating the intermediate green compact 110 subjected to the first press molding process to the melting point (120°C) of the lubricant powder. The lubricant that flows out from the dense area penetrates through the peripheral area, and is supplied to the thin area. This makes it possible to reduce the inter-particle friction resistance of the basic metal powder, and compress the spaces that have been occupied by the lubricant powder. It is also possible to reduce the friction resistance between the basic metal powder and the inner side of the die.

The second press molding device 40 includes the second die 41 that can be pre-heated in advance to the melting point of the lubricant powder. The second press molding device 40 is a means that applies the second pressure P2 to the mixed powder intermediate compressed body 110 that is placed in the second die 41 that is pre-heated to the melting point of the lubricant powder to form the high-density mixed powder final compressed body (final green compact) 120.

In the first embodiment, the maximum capacity (pressure P) of the second press molding device 40 is the same as that (10 tons/cm²) of the first press molding device 20. The first press molding device 20 and the second press molding device 40 are configured as a single press, and the upper die 25 and the upper die 45 are moved upward and downward in synchronization using the common slide 5 illustrated in FIG. 2. The above configuration is economical, and can reduce the production cost of the final green compact 120.

As illustrated in FIG. 2, the die includes the lower die 41 that is secured on a bolster, and the upper die 45 that is secured on the slide 5. The lower part of a cavity 42 of the lower die 41 has a shape (cylindrical shape) corresponding to the shape (ring-like shape) of the final green compact 120, and the upper part of the cavity 42 has a slightly larger shape so that the intermediate green compact 110 can be received. The upper die 45 can be pushed into the lower die 41 (42), and is moved upward and downward using the slide 5. A movable member 43 is fitted into the lower side of the cavity 42 so that the movable member 43 can move in the vertical direction. Note that the die (41) and the die (21) are adjusted in height (position) corresponding to the vertical difference in dimensions between the compression targets (110 and 120).

The movable member 43 is moved upward using a knockout pin (not illustrated in the drawings) that moves upward through a through-hole 44 that is formed under the ground level GL. The final green compact 120 in the second die (41 (42)) can thus be moved upward to the transfer level HL. The movable member 43 functions as a second ejection means for ejecting the final green compact 120 in the die (41 (42)) to the outside (transfer level HL). Note that the second ejection means may be implemented using another means. The movable member 43 and the knockout pin are returned to the initial position after the final green compact 120 has been discharged to a discharge chute 59, and a new intermediate green compact 110 has been received from the heating device 30.

The second die (41 (42)) is provided with a per-heating means 47 that can be changed in heating temperature. The pre-heating means 47 heats (pre-heats) the second die (41 (42)) to the melting point (120°C) of the lubricant powder (zinc stearate) before the intermediate green compact 110 is received (placed). Therefore, the intermediate green compact 110 that has been heated can be received without allowing the intermediate green compact 110 to cool. This makes it possible to ensure a lubricating effect while preventing a situation in which the lubricant that has been melted (liquefied) is solidified again.

The pre-heating means 47 can be heated until the time when the final green compact 120 can be press-molded. Therefore, the fluidity of the melted lubricant in all directions during press molding can be further improved, and the friction resistance between the particles and the die 41 (42) can be significantly reduced.

Note that the pre-heating means 47 may be implemented by a hot oil or hot water circulation system or the like instead of an electric heating system.

The relationship between the pressure (second pressure P1) applied by the second press molding device 40 and the density rho of the resulting final green compact 120 is described below with reference to FIG. 4.

The density rho achieved by the second press molding device 40 is indicated by the straight line that is indicated by the solid line (B). Specifically, the density rho does not gradually increase as the second pressure P2 increases, differing from the case of using the first press molding device 20 (see the broken line (A)). More specifically, the density rho does not increase until the final first pressure P1 (e.g., horizontal axis index: 50, 75, or 85) during the first press molding step is exceeded. The density rho increases rapidly when the second pressure P2 has exceeded the final first pressure P1. This means that the second press molding step is performed continuously with the first press molding step.

Therefore, the first press molding step need not be performed in a state in which the first pressure P1 is necessarily increased to a value (horizontal axis index: 100) corresponding to the maximum capacity. This makes it possible to prevent unnecessary time and energy consumption that may occur when the first press molding step is continued after the compressed limit has been reached. Therefore, the production cost can be reduced. Moreover, since it is possible to avoid overloaded operation in which the horizontal axis index exceeds 100, breakage of the die does not occur. This makes it possible to ensure easy and stable operation.

In each example, the molding process was performed in a state in which the first pressure P1 was selected to be a pressure (vertical axis index: 92 to 98) that can increase the density rho to 7.0 to 7.5 g/cm³. In Example 2 (Example 3), the density is indicated by the true density ratio (60 to 75% (70 to 85%)) taking account of the material mixing ratio. The upper-limit value 7.5 g/cm³ (vertical axis index: 98) is selected so that the vertical axis index does not exceed 100 (critical region), and the lower-limit value 7.0 g/cm³ (vertical axis index: 92) is selected so that a margin is provided between the upper-limit value and the lower-limit value. This aims at facilitating handling (e.g., pressure setting) and operation. The second pressure P2 is selected to correspond to a vertical axis index of 92 (98) to 100 so that the final green compact 120 having a density rho (7.75 g/cm³) corresponding to a vertical axis index of 102 can be produced.

A workpiece transfer means 50 can transfer the intermediate green compact 110 removed from the first die 21 using the first ejection means (23, 24) to a given position in the heating device 30, can transfer the heated intermediate green compact 110 from the given position in the heating device 30 to the second die 41, and can transfer the final green compact 120 removed from the second die 41 using the second ejection means (43, 44) to the discharge chute 59.

In the first embodiment, the eorkpiece transfer means 50 is formed by three transfer bars 51, 52, and 53 (see FIG. 3B) that are operated in synchronization. The transfer bars 51, 52, and 53 are moved to the front transfer line (FIG. 3B) from the deep side in FIG. 3A when a transfer request has been issued, moved from left to right, and then returned to the original position. A placement means (52, 43, 44) places the heated mixed powder intermediate compressed body 110 in the second die 42 that is pre-heated to the melting point of the lubricant powder.

Note that the workpiece transfer means may be implemented by a transfer device that includes a finger that is driven in two-dimensional or three-dimensional directions, and the like, and sequentially transfers a workpiece to each die or the like.

The mixed powder high-density molding system according to the first embodiment implements the high-density molding method as described below.

### Preparation of mixed powder

The basic metal powder and the lubricant powder (zinc stearate powder) (0.03 to 0.10 wt%) are mixed to prepare the mixed powder 100 in a dry state. A given amount of the mixed powder 100 is supplied to the mixed powder feeding device 10 (step PR0 in FIG. 1).

### Filling with mixed powder

The mixed powder feeding device 10 is moved from a given position (indicated by the solid line in FIG. 3B) to a supply position (indicated by the dotted line in FIG. 3B) at a given timing. The inlet of the mixed powder feeding device 10 is then opened, and the empty lower die 21 (22) of the first press molding device 20 is filled with the mixed powder 100 (step PR1 in FIG. 1). The lower die 21 (22) can be filled with the mixed powder 100 within 2 seconds, for example. The inlet is closed after the lower die 21 (22) has been filled with the mixed powder 100, and the mixed powder feeding device 10 is returned to the given position (indicated by the solid line in FIG. 3B).

### Forming of intermediate green compact

The upper die 25 of the first press molding device 20 is moved downward using the slide 5 illustrated in FIG. 2, and applies the first pressure P1 to the mixed powder 100 in the lower die 21 (22) (first press molding process). The solid lubricant produces a sufficient lubricating effect. The density rho of the compressed intermediate green compact 110 increases along the broken line (A) illustrated in FIG. 4. When the first pressure P1 has reached a pressure (9.5 tons/cm²) corresponding to a horizontal axis index of 95, for example, the density rho increases to 7.25 g/cm³ (vertical axis index: 95). The press molding process is performed for 8 seconds, for example, to obtain the intermediate green compact 110 that has been molded in the die (21) (see FIG. 3A) (step PR2 in FIG. 1). The upper die 25 is then moved upward using the slide 5. Note that the second press molding process on the preceding intermediate green compact 110 is performed in the second press molding device 40 in synchronization with the above operation.

### Removal of intermediate green compact

The first ejection means (23) moves the intermediate green compact 110 upward to the transfer level HL. Specifically, the intermediate green compact 110 is removed from the lower die 21. The workpiece transfer means 50 then transfers the intermediate green compact 110 to the heating device 30 using the transfer bar 51 (see FIG. 3B), and the movable member 23 is returned to the initial position. The intermediate green compact 110 that has been transferred to the heating device 30 is positioned on the wire-mesh holding member (32) (see FIG. 3A).

### Heating

The heating device 30 starts to operate (see FIG. 3A). Hot air is blown against the intermediate green compact 110 from the blow hood 31, so that the intermediate green compact 110 is heated to the melting point (120°C) of the lubricant powder (step PR3 in FIG. 1). Specifically, the lubricant is melted, and the distribution of the lubricant in the intermediate green compact 110 becomes uniform. The heating time is 8 to 10 seconds, for example. Note that the hot air is recycled through the wire-mesh holding member 32 and the exhaust/circulation hood 33.

### Placement of the heated intermediate green compact

The heated intermediate green compact 110 is transferred to the second press molding device 40 by the workpiece transfer means 50 (transfer bar 52) (see FIG. 3B), and positioned over the lower die 41, and placed on the movable member 43 in the lower die 41 (42) (step PR4 in FIG. 1).

### Pre-heating of die

The pre-heating means 47 of the second press molding device 40 heats the die (41 (42)) to the melting point (120°C) of the lubricant powder before the intermediate green compact 110 is received (placed). This makes it possible to prevent solidification of the lubricant in the intermediate green compact 110 that has been received.

### Forming of final green compact

The upper die 45 is moved downward using the slide 5 illustrated in FIG. 2 (see FIG. 3A), and applies the second pressure P2 to the intermediate green compact 110 in the lower die 41 (42). The liquid lubricant produces a sufficient lubricating effect. Since the lubricant flows in all directions during the press molding process, the friction resistance between the particles and the die can be efficiently reduced. The density rho of the compressed intermediate green compact 110 increases along the solid line (B) illustrated in FIG. 4. Specifically, when the second pressure P2 has exceeded a horizontal axis index of 95 (9.5 ton/cm²), for example, the density rho rapidly increases from 7.25 g/cm³ to a value (7.75 g/cm³) corresponding to a vertical axis index of 102. When the second pressure P2 is increased to a horizontal axis index of 100 (10 tons/cm²), the density rho (7.75 g/cm³) becomes uniform over the entire green compact. The second press molding process is performed for 8 seconds, for example, to obtain the final green compact 120 that has been molded in the die (41) (step PR5 in FIG. 1). The upper die 45 is then moved upward using the slide 5. Note that the first press molding process on the subsequent intermediate green compact 110 is performed in the first press molding device 20 in synchronization with the above operation.

### Removal of product

The second ejection means (43) moves the final green compact 120 upward to the transfer level HL. Specifically, the final green compact 120 is removed from the lower die 41. The workpiece transfer means 50 then transfers the final green compact 120 to the discharging shot 59 using the transfer bar 53 (see FIG. 3B), and the movable member 43 is returned to the initial position.

### Production cycle

According to the above high-density molding method, since the first press molding process, the heating process, and the second press molding process can be performed on the sequentially supplied metal powder 100 in synchronization, the high-density green compact 120 can be produced in a cycle time of 12 to 14 seconds (i.e., maximum heating time (10 seconds) + workpiece transfer time (e.g., 2 to 4 seconds)). This makes it possible to remarkably reduce the production time as compared with the related-art example (high-temperature sintering time: 30 minutes or more). For example, it is possible to ensure stable supply of automotive parts that have a reduced size and weight, a complex shape, and high mechanical strength, or electromagnetic device parts that exhibit excellent magnetic properties and mechanical strength, and significantly reduce the production cost.

### Example 1

A basic metal powder (magnetic-core vitreous insulating film-coated iron powder) and a lubricant powder (zinc stearate powder) (0.03 to 0.10 wt%) were mixed to prepare a mixed powder 100. The mixed powder 100 was press-molded by applying the first pressure P1 to form an intermediate green compact 110 having a density of 7.0 to 7.5 g/cm³. The first press molding step could be performed most smoothly when the amount of the lubricant powder was 0.03 wt%. The intermediate green compact 110 was heated to 120°C, and press-molded by applying the second pressure P2 to form a final green compact 120 having a density rho of 7.75 g/cm³ (vertical axis index: 102). The vitreous material was not modified/melted since the melting point of the lubricant powder was low. As a result, a high-quality magnetic-core green compact that can reduce eddy current loss and improve magnetic flux density could be efficiently produced.

### Example 2

A basic metal powder (magnetic-core iron-based amorphous powder) and a lubricant powder (zinc stearate powder) (0.03 to 0.10 wt%) were mixed to prepare a mixed powder 100. The mixed powder 100 was press-molded by applying the first pressure P1 to form an intermediate green compact 110 having a true density ratio of 60 to 75%. The first press molding step could be performed most smoothly when the amount of the lubricant powder was 0.03 wt%. The intermediate green compact 110 was heated to 120°C, and press-molded by applying the second pressure P2 to form a final green compact 120 having a true density ratio of 80% (vertical axis index: 102). As a result, a magnetic-core green compact that can reduce iron loss and exciting current as compared with a green compact formed by a related-art method can be efficiently produced.

### Example 3

A basic metal powder (magnetic-core Fe-Si alloy powder) and a lubricant powder (zinc stearate powder) (0.03 to 0.10 wt%) were mixed to prepare a mixed powder 100. The mixed powder 100 was press-molded by applying the first pressure P1 to form an intermediate green compact 110 having a true density ratio of 70 to 85%. The first press molding step could be performed most smoothly when the amount of the lubricant powder was 0.03 wt%. The intermediate green compact 110 was heated to 120°C, and press-molded by applying the second pressure P2 to form a final green compact 120 having a true density ratio of 90% (vertical axis index: 102). As a result, a magnetic-core green compact that exhibits excellent magnetic properties as compared with a green compact formed by a related-art method can be efficiently produced.

### Example 4

A basic metal powder (mechanical part pure iron powder) and a lubricant powder (zinc stearate powder) (0.03 to 0.10 wt%) were mixed to prepare a mixed powder 100. The mixed powder 100 was press-molded by applying the first pressure P1 to form an intermediate green compact 110 having a density of 7.0 to 7.5 g/cm³. The first press molding step could be performed most smoothly when the amount of the lubricant powder was 0.03 wt%. The intermediate green compact 110 was heated to 120°C, and press-molded by applying the second pressure P2 to form a final green compact 120 having a density rho of 7.75 g/cm³ (vertical axis index: 102). Mechanical strength (e.g., tensile force) increases rapidly and hyperbolically corresponding to density. Specifically, a mechanical part that exhibits very high mechanical strength could be efficiently produced without performing a sintering process. It was also confirmed that a similar product could be obtained when mixing the basic metal powder with an alloy-forming metal powder. Therefore, high strength can be achieved even when producing an elongated cylindrical shape as illustrated in FIG. 5B.

The high-density molding method according to the first embodiment can stably and reliably produce a high-density green compact while significantly reducing the production cost by filling the first die 21 with the mixed powder 100 prepared by mixing the basic metal powder with the low-melting-point lubricant powder, applying the first pressure P1 to the mixed powder 100 in the first die to form the mixed powder intermediate compressed body 110, heating the mixed powder intermediate compressed body 110 to the melting point (120°C) of the lubricant powder, placing the heated mixed powder intermediate compressed body 110 in the pre-heated second die 41, and applying the second pressure P2 to the mixed powder intermediate compressed body 110 in the second die 41 to form the mixed powder final compressed body 120.

Since a sintering process at a high temperature can be made unnecessary, oxidation of the green compacts 110 and 120 can be significantly suppressed while minimizing energy consumption, and significantly reducing the production cost. This is advantageous from the viewpoint of environmental protection.

Since the lubricant powder has a low melting point within the range of 90 to 190°C, various types of lubricant can be selected while suppressing oxidation.

The high-density molding method according to the first embodiment can efficiently and stably produce a magnetic core part that exhibits excellent magnetic properties corresponding to the type of the basic metal powder, using a magnetic-core vitreous insulating film-coated iron powder, a magnetic-core iron-based amorphous powder, or a magnetic-core Fe-Si alloy powder as the basic metal powder.

Since the second pressure P1 can be made equal to the first pressure P, it is possible to easily implement the press molding step, facilitate handling, indirectly reduce the green compact production cost, and easily implement the system based on a single press, for example.

It has been impossible to achieve a density equal to or higher than that corresponding to a vertical axis index of 100, taking account of the capacity (horizontal axis index=100 (see FIG. 4)) of a related-art system (e.g., press). According to the first embodiment, however, it is possible to achieve a density equal to or higher than that corresponding to a vertical axis index of 102 using an identical (existing) system. This fact achieves a major breakthrough in the technical field.

Moreover, the high-density molding system 1 that includes the mixed powder feeding device 10, the first press molding device 20, the heating device 30, and the second press molding device 40 can reliably and stably implement the high-density molding method.

### Second embodiment

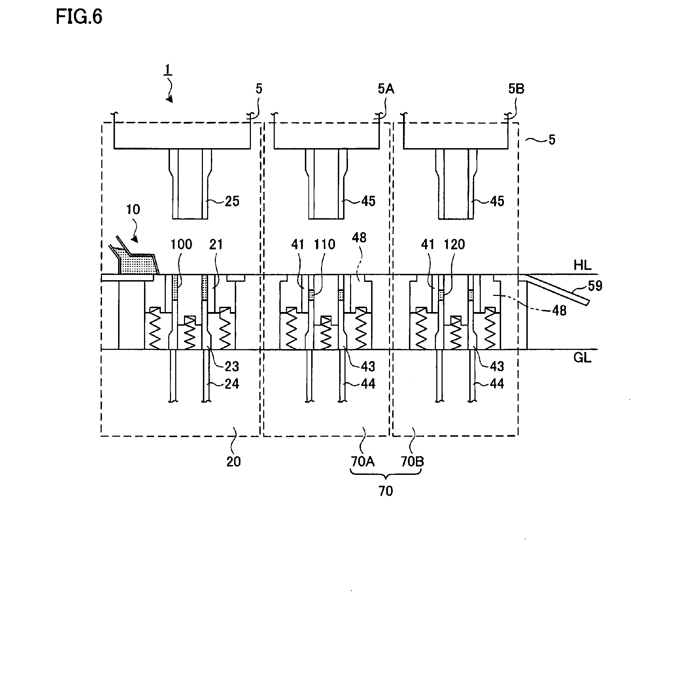

FIG. 6 illustrates a second embodiment of the invention. The second embodiment is identical with the first embodiment as to the mixed powder feeding device 10 and the first press molding device 20, but differs from the first embodiment in that the heating device 30 and the second press molding device 40 are integrally formed.

Specifically, a high-density molding system according to the second embodiment includes a heating/press molding device 70 that has the function of the heating device 30 and the function of the second press molding device 40 (see the first embodiment). The heating/press molding device 70 includes a plurality of (e.g., two) heating/press molding sub-devices 70A and 70B. The heating/press molding sub-devices 70A and 70B are selectively (sequentially) operated by a control means (not illustrated in the drawings) in a production cycle.

Each heating/press molding sub-device 70A (70B) has a basic structure similar to that of the second press molding device 40 described above in connection with the first embodiment. Each heating/press molding sub-device 70A (70B) includes a hybrid heating means 48 having the functions of the heating device 30 and the pre-heating means 47 described above in connection with the first embodiment.

Specifically, the hybrid heating means 48 is an electric heating means having a present temperature change function. The hybrid heating means 48 can pre-heat the lower die 41 to the melting point (120°C) of the lubricant in advance (i.e., before the intermediate green compact 110 is received). When the intermediate green compact 110 has been received, the amount of heat is changed so that the entire intermediate green compact 110 can be heated to the melting point (120°C) of the lubricant. The heating target area can also be selected (changed). After completion of the above heating process, the second press molding process is performed using the second press molding device 40 in the same manner as in the first embodiment. The hybrid heating means 48 can maintain the intermediate green compact 110 at a temperature equal to or higher than the melting point (120°C) of the lubricant during the second press molding process.

As illustrated in FIG. 6, each heating/press molding sub-device (20, 70A, 70B) has an independent press structure, and each slide (5, 5A, 5B) is independently moved upward and downward by controlling the rotation of each motor. Specifically, when one of the heating/press molding sub-devices 70A and 70B performs press molding operation, the other of the heating/press molding sub-devices 70A and 70B performs preheating operation, and does not perform press molding operation. This also applies to the case where the heating/press molding device 70 is implemented by three or more heating/press molding sub-devices taking account of the production cycle time.

In the second embodiment, when the third intermediate green compact 110 is press-molded in the first press molding device 20, the second intermediate green compact 110 is heated by the heating/press molding sub-device 70A (or 70B), and the first intermediate green compact 110 is press-molded by the heating/press molding sub-device 70B (or 70A) to form the final green compact 120.

According to the second embodiment, since the heating/press molding device 70 is implemented by a plurality of heating/press molding sub-devices 70A and 70B having an identical structure, the system can be simplified as compared with the first embodiment. It is also possible to simplify the production line, and further facilitate handling.

Note that the first press molding device 20 and the heating/press molding sub-device 70A (or 70B), or the first press molding device 20 and the heating/press molding sub-devices 70A and 70B may be implemented by a single press structure.

Although only some embodiments of the present invention have been described in detail above, those skilled in the art will readily appreciate that many modifications are possible in the embodiments without materially departing from the novel teachings and advantages of this invention. Accordingly, all such modifications are intended to be included within scope of this invention.

### REFERENCE SIGNS LIST

- 1: High-density 6molding system
- 10: Mixed powder feeding device
- 20: First press molding device
- 30: Heating device
- 40: Second press molding device
- 47: Pre-heating means
- 48: Hybrid heating means
- 50: Workpiece transfer means
- 70: Heating/press molding device
- 70A, 70B: Heating/press molding sub-device
- 100: Mixed powder
- 110: Mixed powder intermediate compressed body (intermediate green compact)
- 120: Mixed powder final compressed body (final green compact)

## Claims

1. A mixed powder high-density molding method comprising:
filling a first die with a mixed powder that is a mixture of a basic metal powder and a low-melting-point lubricant powder;
applying a first pressure to the mixed powder in the first die to form a mixed powder intermediate compressed body;
heating the mixed powder intermediate compressed body removed from the first die to a melting point of the lubricant powder;
placing the heated mixed powder intermediate compressed body in a second die that has been pre-heated to the melting point of the lubricant powder; and
applying a second pressure to the mixed powder intermediate compressed body in the second die to form a high-density mixed powder final compressed body.

2. The mixed powder high-density molding method as defined in claim 1,
wherein the lubricant powder has a low melting point within a range of 90 to 190°C.

3. The mixed powder high-density molding method as defined in claim 1,
wherein the mixed powder is prepared by mixing a magnetic-core vitreous insulating film-coated iron powder as the basic metal powder with 0.03 to 0.10 wt% of a zinc stearate powder as the lubricant powder, and the first pressure is selected so that the mixed powder intermediate compressed body can be compressed to have a density of 7.0 to 7.5 g/cm³.

4. The mixed powder high-density molding method as defined in claim 1,
wherein the mixed powder is prepared by mixing a magnetic-core iron-based amorphous powder as the basic metal powder with 0.03 to 0.10 wt% of a zinc stearate powder as the lubricant powder, and the first pressure is selected so that the mixed powder intermediate compressed body can be compressed to have a true density ratio of 60 to 75%.

5. The mixed powder high-density molding method as defined in claim 1,
wherein the mixed powder is prepared by mixing a magnetic-core Fe-Si alloy powder as the basic metal powder with 0.03 to 0.10 wt% of a zinc stearate powder as the lubricant powder, and the first pressure is selected so that the mixed powder intermediate compressed body can be compressed to have a true density ratio of 70 to 85%.

6. The mixed powder high-density molding method as defined in claim 1,
wherein the second pressure is selected to be equal to the first pressure.

7. A mixed powder high-density molding system comprising:
a mixed powder feeding device that can externally supply a mixed powder that is a mixture of a basic metal powder and a low-melting-point lubricant powder;
a first press molding device that applies a first pressure to the mixed powder, with which a first die has been filled using the mixed powder feeding device, to form a mixed powder intermediate compressed body;
a heating device that heats the mixed powder intermediate compressed body removed from the first die to a melting point of the lubricant powder; and
a second press molding device that includes a second die that can be pre-heated to the melting point in advance, and applies a second pressure to the mixed powder intermediate compressed body that is placed in the second die that has been pre-heated to form a high-density mixed powder final compressed body.

8. The mixed powder high-density molding system as defined in claim 7,
wherein the heating device and the second press molding device are formed by a heating/press molding device that has a function of the heating device and a function of the second press molding device, the heating/press molding device includes a plurality of heating/press molding sub-devices, and each of the plurality of heating/press molding sub-devices can be selectively and sequentially operated in each cycle.
